# EUROPEAN PATENT APPLICATION

(11) **EP 1 324 169 A2**
(43) Date of publication of application: **02.07.2003**
(21) Application number: 02027936.0
(22) Date of filing: 13.12.2002
(51) Int. Cl.: G05B 19/4097

(54) **Apparatus and Method for creating Intermediate Stage Model**

(30) Priority: 14.12.2001 JP 2001381451
(71) Applicant: TOYOTA JIDOSHA KABUSHIKI KAISHA, Aichi-ken 471-8571 (JP)
(72) Inventor: Hirano, Satoru, Toyota-shi, Aichi-ken, 471-8571 (JP); Sakane, Hideki, Toyota-shi, Aichi-ken, 471-8571 (JP)
(74) Representative: Winter, Brandl, Fürniss, Hübner, Röss, Kaiser, Polte Partnerschaft

(57) **Abstract**

A system which facilitates generation of a drawing for machining instruction is provided. Unit process model information (244) concerning a unit process model which can be machined using a single tool is used to define a product model (20). The unit process model information (244) includes information concerning the shape and machining property of a machined portion. A combination of the unit process model information (244) and disposition information (246) for a machined portion constitutes machining step information (242) indicating a single machining operation. When machining information (24) formed by providing the machining step information (242) according to an actual machining sequence is combined with a blank material model (22) which is the subject of the machining, a product model (20) including the final product shape and machining information can be obtained. When the machining step information (242) is applied to the blank material model (22) up to a desired stage in the history replay processing unit (12), an intermediate stage model indicating the workpiece shape and machining property in the middle of the machining process can be created. A machining instruction drawing can be generated by generating a cross sectional view or the like from the intermediate stage model.

## Description

### BACKGROUND OF THE INVENTION

### Field of the Invention

The present invention relates to an apparatus and a method for supporting a machining process design for a product using CAD (computer-aided design).

### Description of Related Art

For development of various products such as mechanical products, in addition to design of a product shape (hereinafter referred to as "product design"), design for manufacturing preparation of the product is also required. For example, when designing a vehicle engine, as manufacturing preparation, design of a die, such as a metal mold, for forming a blank material of a product (hereinafter referred to as "die design") or design of a machining process such as cutting (hereinafter referred to as "process design") is performed.

In product design, a completed shape of a product is designed. Three-dimensional CAD systems have come to be used to effectively design desired three-dimensional shapes for products and product components. In die design, the shape of a mold for forming a blank material, which is the base material of a product, is also designed. The three-dimensional CAD system is similarly used in die design to accomplish an effective design operation.

Process design involves the design of procedures for machining a completed shape from a blank material. One machining operation is represented by a machine tool or a tool to be used for machining, and machining conditions such as cutting conditions. Typically, a plurality of machining operation stages are required for completing a product, and a whole machining process is constituted by a sequence of machining conditions at these stages.

Conventionally, it is common for a product shape to be initially designed by a product design team, and then, based on the product shape, additional design operations are performed by die design and process design teams.

A conventional CAD systems used for product design include only a function to create a model representing a completed shape of a product. Further, a product designer may not have a sufficient knowledge concerning machining. Under these circumstances, it is difficult for a product designer to sufficiently review workability (whether the machining is possible or not, easiness of machining, machining cost, or the like) at the product design stage. Consequently, workability problems are often not discovered until the subsequent process design stage and a design change is required, which causes an increase in the time and costs for product development. Also, when such a design change is not possible due to limitations of the development time schedule or the like, the target machining cost or machining time for manufacturing may not be accomplished.

Further, designs are often modified at the process design stage in order to improve the manufacturing process. However, because a model created on the CAD system can express only the product shape, such operation at the process design stage are usually performed using a paper drawing or the CAM (computer-aided manufacturing) system. It is therefore difficult to maintain conformity between the design modifications made by the process design team, which are expressed on drawings or a CAM model, and the CAD model or drawings created by the product and die design teams.

In addition, a product is manufactured through a plurality of machining processes, and these processes are generally carried out in different machining stations or different machining tools, and some process operations may be outsourced to other factories. For this reason, a drawing and/or an instruction form indicating the machining operation for each unit process is actually created and provided to each machining department. Because each machining instruction drawing must be created individually by the process design department or the like, significant labor and time is required.

### SUMMARY OF THE INVENTION

The present invention was conceived in view of the aforementioned problems of the related art and aims to provide an apparatus capable of easily generating information, such as a drawing for machining instruction, indicative of a machining operation performed by machining departments design team.

In order to accomplish the above object, in accordance with one aspect of the present invention, there is provided an intermediate model creating apparatus comprising a model database for storing a product model which defines a shape of a product using a blank material model representing a shape of a blank material to be machined, one or more unit process models including information concerning a machined portion to be formed by a machining operation, and information concerning an execution order for carrying out a machining operation corresponding to each unit process model with regard to the blank material; and a modeler for sequentially applying each unit process model to the blank material model up to a midpoint in the execution order and creating an intermediate stage model indicating a product shape in a state where the machining operation corresponding to each unit process model has been applied up to the midpoint in the execution order.

In one aspect of the present invention, the unit process model includes information concerning a shape of a machined portion which is machined by a single tool.

In another aspect of the present invention, the information concerning the execution order includes information concerning the order of unit processes determined according to a machine tools or working machine used for the machining operation and information concerning the order of unit process models constituting a unit process within the unit process, and the modeler includes means for sequentially applying each unit process model up to a designated unit process to the blank material model and creating, as one type of an intermediate stage model, an in-process model representing a product shape produced as a result of the machining operation of the designated unit process.

In a still another aspect of the present invention, each unit process model includes machining property information concerning a machined part represented by the model, and the intermediate stage model is associated with the machining property information of the unit process model included in the intermediate stage model.

In a further aspect of the present invention, the blank material model and the unit process model include shape information in the form of a three-dimensional solid model, and a shape of the product model and the intermediate stage model represented by a combination of the blank material model and the unit process model is also expressed in the form of a three-dimensional solid model.

In another aspect of the present invention, the apparatus further comprises means for generating a cross sectional view of a designated cross section regarding the intermediate stage model created by the modeler.

In still another aspect of the present invention, the apparatus further comprises means for generating a projection view of a predetermined projection surface regarding the intermediate stage model created by the modeler.

In a further aspect of the present invention, the apparatus further comprises means for storing a measurement of a workpiece corresponding to the intermediate stage model as property information concerning the intermediate stage model.

In another aspect of the present invention, the apparatus further comprises means for performing, based on the intermediate stage model and information regarding a tool used for machining a unit process model applied to the intermediate stage model in the execution order, interference inspection concerning the tool.

In a further aspect of the present invention, the apparatus further comprises means which creates a model indicating a state in which a tool model for each tool used in the unit process corresponding to the in-process model is disposed with regard to a portion to which the tool is applied and performs, based on this model and a jig model representing a jig used in the unit process, interference inspection concerning the jig.

In a still further aspect of the present invention, the apparatus further comprises means for generating an NC (numerical control) machining program for controlling an NC machine which performs a machining operation in the unit process based on information concerning the unit process model included in the product model and the execution order.

In another aspect of the present invention, the apparatus further comprises a library in which a plurality of types of unit process models are registered and product model creating means for creating a product model based on one or more unit process model registered in the library and the blank material model, wherein the product model creating means includes unit process model selection means for accepting a user input of a selection instruction concerning the unit process model in the library and of disposition information indicating disposition of the unit process model associated with the selection instruction, and sequence input means for accepting a user input of an instruction concerning the order of applying the unit process model selected by the unit process model selection means and registering the order as the execution order.

Moreover, a method according to the present invention comprises the steps of creating a product model which stores a blank material model representing a shape of a blank material to be machined, a unit process model including information concerning a machined portion to be formed by a machining operation, and information concerning an execution order for carrying out a machining operation corresponding to each unit process model with regard to the blank material; and sequentially applying each unit process model to the blank material model up to a midpoint in the execution order to create an intermediate stage model indicating a product shape in a state where the machining operation corresponding to each unit process model has been applied up to the midpoint in the execution order.

### BRIEF DESCRIPTION OF THE DRAWINGS

These and other objects of the invention will be explained in the description below, in connection with the accompanying drawings, in which:
Fig. 1 is a view showing a configuration of a system according to a first embodiment of the present invention;
Fig. 2 is a view for explaining unit process models;
Fig. 3 is a view illustrating one example of a product model;
Fig. 4 is a view illustrating one example of machining information;
Fig. 5 is a view showing intermediate stage models for the respective machining steps;
Fig. 6 is a view for explaining a machining instruction drawing;
Fig. 7 is a view showing a configuration of a system according to a second embodiment of the present invention;
Fig. 8 is a view for explaining a machined portion model;
Fig. 9 is a view for explaining machined portion shape data;
Fig. 10 is a view for explaining an operation for creating a product model;
Fig. 11 is a view for explaining tool interference inspection;

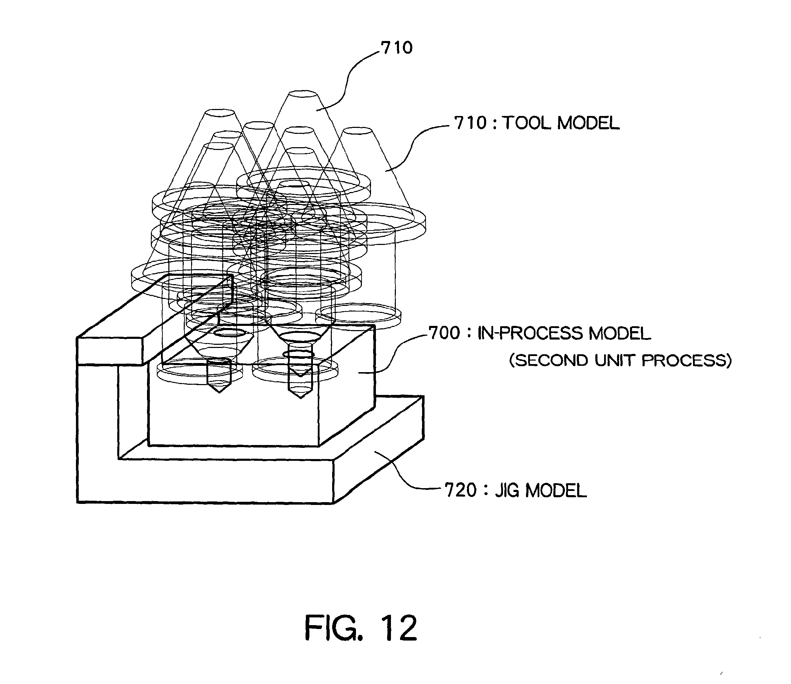

Fig. 12 is a view for explaining jig interference inspection;
Fig. 13 is a view for explaining registration of a measurement data in association with an operation model; and
Fig. 14 is a view for explaining generation of an NC machining program.

### DETAILED DESCRIPTION OF THE PREFERRED EMBODIMENTS

Preferred embodiments of the present invention will be described with reference to the drawings.

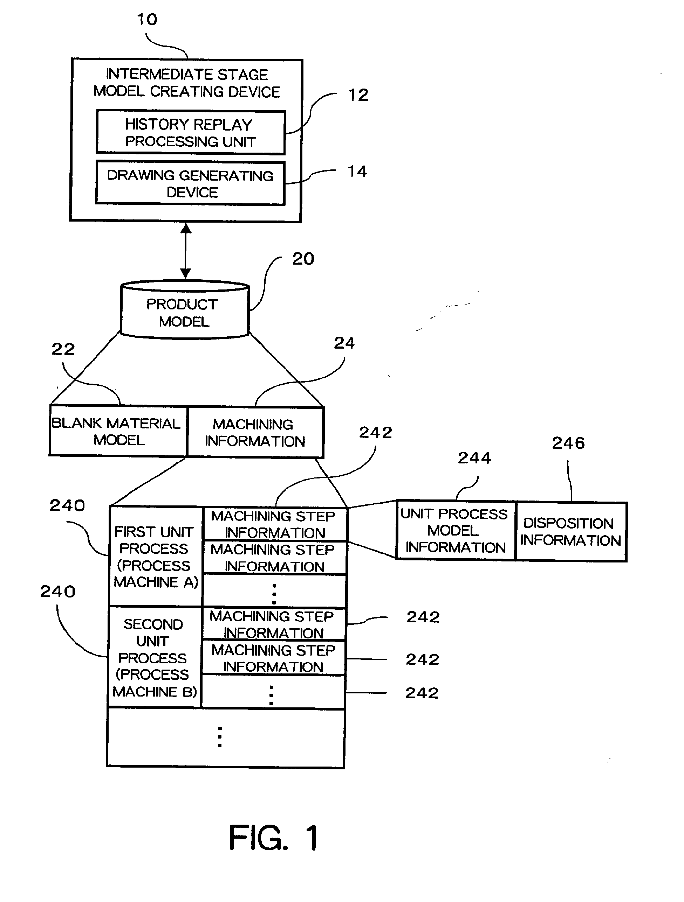

Fig. 1 is a functional block diagram schematically showing a configuration of an intermediate stage model creating system according to one embodiment of the present invention. This system can be utilized for creating a drawing or an instruction form regarding a machining instruction for each machining department at which a product is machined.

Roughly speaking, the system includes a storage device which stores a product model 20 which is an electronic data specifying a shape or machining property of a product, and an intermediate stage model creating device 10 which uses the product model 20 for performing an operation such as creation of a machining instruction drawing. It should be understood that an intermediate stage model is a model indicating a product shape or machining properties at an intermediate stage in the middle of a series of machining procedure for obtaining a final completed product (the term "completed" here refers to "complete state in the machining operation"). The machining instruction drawing or the like is generated based on this intermediate stage model.

Contrary to a product model created with a typical CAD device as conventionally used, the product model 20 according to the present embodiment includes information concerning the machining operation for each portion of a product shape and the order of machining each portion, in addition to the information concerning the product shape. More specifically, the product model 20 includes a blank material model 22 and machining information 24.

The blank material model 22 is a model which represents a shape of a blank material to be machined. The blank material model 22 may include, in addition to information concerning a blank material shape, information concerning properties (a material, for example) of the blank material. The shape of the blank material is expressed as a three-dimensional solid model.

The machining information is composed of a series of machining step information 242, and each machining step information 242 includes unit process model information 244 and disposition information 246. The unit process model is a model indicating a unit of the machining operation performed using a single working machine or process machine with a single tool (hereinafter referred to as a "unit machining operation").

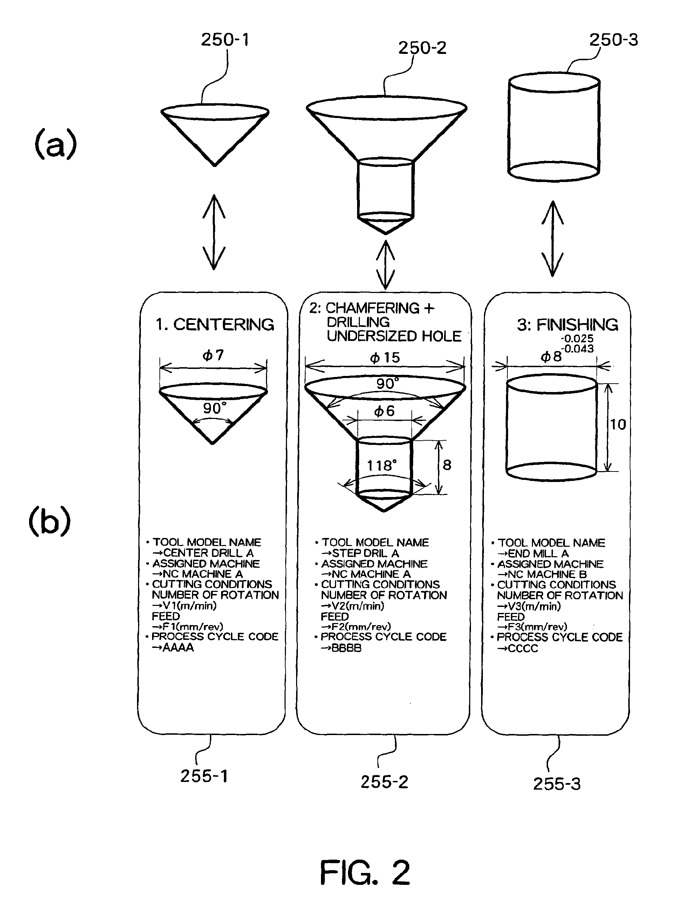

Fig. 2 shows three specific examples of unit process models. These unit process models include shape information 250-1 to 250-3 concerning a machined portion to be formed by the respective unit machining operation, and machining property information 255-1 to 255-3 indicating the corresponding machining operations. The shape information 250 of the unit process model is preferably expressed by a three-dimensional solid model. The machining property information 255 may include items such as dimensional tolerance, a tool model name, an assigned machine, cutting conditions and process cycles. The "dimensional tolerance" is that required by the unit machining operation and is set when necessary. "The tool model name" is identification information for specifying a tool used for the corresponding unit machining operation. Here, a tool model is a model indicating the shape and relevant properties of a tool. Although only the tool name information is sufficient as machining instructions provided to the machining department, according to the present embodiment, because tool interference inspection or other operations using such a tool model which is provided as electronic data on the system is also expected, identification information for specifying the tool model is used (the details of which will be described later). The "assigned machine" is identification information concerning a machine assigned for the unit machining operation. The "cutting condition" is a data item indicating the cutting conditions for the corresponding unit machining operation, and includes, for example, the tool rotation and feed rates. The "process cycle" is a code indicating the process cycle for performing the unit machining operation. The process cycle refers to information (rules) which specifies a tool movement pattern, and includes information such as "a tool is fed at a high rate until it reaches the start position of hole machining, and is then fed at a lower rate from that start position to a predetermined depth, and subsequently the feed rate is increased until the tool reaches a depth point where machining process is to be performed and the tool is rotated for a predetermined time while feeding is stopped" and "a movement in which a tool is fed by a predetermined amount and is then slightly retreated is repeated ("woodpecker movement")". There are numerous types of tool movement patterns even when the same hole shape is formed with the same tool, and the machined result depends on the movement pattern which is used. In the present embodiment, each of these various movement patterns (namely, each process cycle) is assigned a code which is registered in advance, so that a process cycle to be used can be designated using the code. The machining property information 255 may further include other machining property items such as a coolant designated for machining. In addition, the information concerning dimension of each unit process model may be included in the machining property information 255. It should be understood that all these machining property items need not be set for each unit process model 250, and only necessary items are set for each model 250.

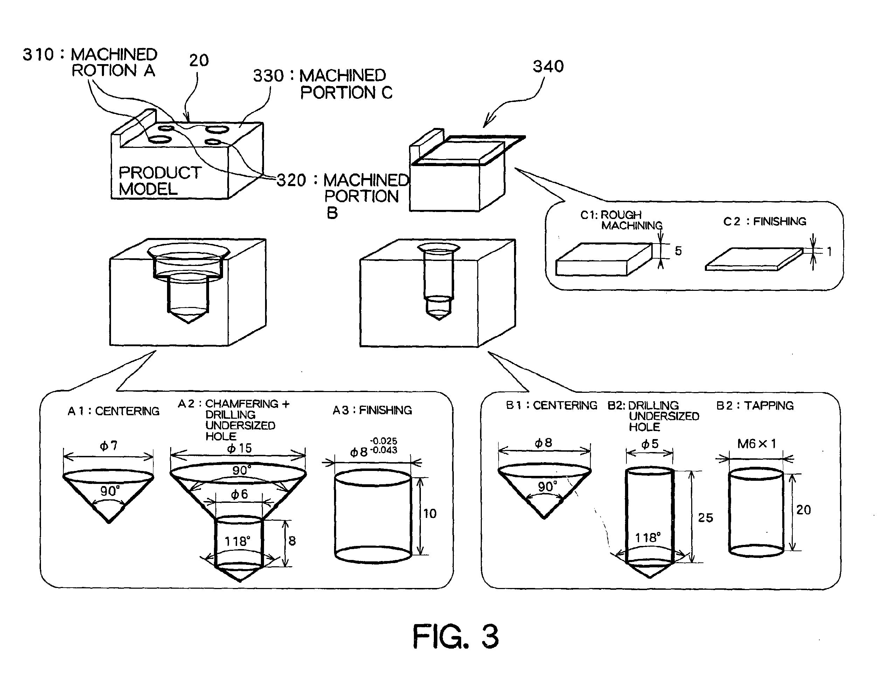

When the three unit process models 250-1 to 250-3 illustrated in Fig. 2 are sequentially applied in that order, a machined portion A310 as shown in Fig. 3 is formed.

Further, the unit process model information 244 may be the above-described information concerning the shape and machining property of a unit process model per se, or may be information used for referring to the information concerning that unit process model (e.g., the identification information of the unit process model) which is separately stored in a library or the like.

Referring back to Fig. 1, the disposition information 246 refers to information indicating how the unit process model represented by the unit process model information 244 is disposed within a space which defines a product model, and such information can be represented by the position and direction in which the unit process model is disposed.

Although with the unit process model, only the machined shape and machining property are represented, by designating the disposition state of the unit process model as the disposition information 246, the position and direction of the unit process model within the space defining a product model are determined. Consequently, a machined portion to be formed by the unit machining operation which is represented by the corresponding unit process model is determined.

According to the present embodiment, a desired unit process model is selected by a designer among a group of unit process models previously provided and is then disposed on the space of a product model, so that the product model indicative of the application result of the unit machining operation is defined. For example, the shape of a product model is obtained from a set operation regarding a solid model of a blank material model and a solid model of a unit process model disposed according to the disposition information 246. Specifically, when the shape of a unit process model corresponds to a shape of a portion to be removed from a workpiece by applying the unit machining operation, the set operation is an operation in which the unit process model is subtracted from the blank material model.

As described above, the machining step information 242 represents an individual and specific unit machining operation which is actually applied for forming a product. Then, the machining information 24 is a sequence of machining step information 242 indicating one or more unit machining operations required for forming a final completed product which are provided in the order of application (a machining procedure). Because each machining step information 242 includes information concerning the shape of a machined portion to be formed by the unit machining operation, it is possible to obtain the shape of a final completed product by sequentially applying each machining step information 242 to the blank material model 22 according to the sequential order until the last machining step information 242. For computation of such a product model shape, an operation history replay function provided by a three-dimensional CAD solid modeler can be utilized. Specifically, in a conventional CAD system, a sequence of geometric operations applied to a model shape are stored as an operation history, and these geometric operations are then sequentially added according to the operation history to thereby compute a model shape. According to the method of computing a model shape of the present embodiment, these geometric operations of the conventional system are replaced with the machining step information 242. While with the operation history replay function of the conventional CAD system, only a model shape is computed, according to the present embodiment, the unit process model 244 of the machining step information 242 includes not only the shape information but also the machining property information. Therefore, according to the present embodiment, with the history replay function, not only is the shape of a product obtained, but it is also possible to refer to the machining property information of the unit process model corresponding to each portion of the obtained product shape. Although it is not strictly correct to use the term "history" for the sequence of machining step information 242 of the present embodiment, which indicates the machining procedure (schedule) to be performed in the future, the present specification uses this term so as to facilitate understanding of the present embodiment as analogy to the operation history replay function of the conventional CAD system.

The order of the machining step information 242 in the machining information 24 is determined by a process designer, for example, while considering the content of a product model, equipment in a machining job site, or the like. With regard to a supporting apparatus used for establishing a product model including the process design and the process procedure thereof, an example will be described below.

In the process design, in view of working efficiency, a design is created such that machining steps which can be carried out sequentially by the same machine are arranged in a successive order. Similarly, in the machining information 24, a series of machining step information 242 which is sequentially processed by the same machine constitute one group, which is referred to as "a unit process". Specifically, in the machining information 24, the machining step information 242 is grouped into these unit processes 240. Namely, each unit process 240 is composed of a sequence of one or more units of machining step information 242. For a single machine, one such unit process 240 includes the machining operations to be performed by that machine.

One example data content of the product model 20 according to the present embodiment has been described above. The intermediate stage model creating device 10 generates a drawing and/or an instruction form for the intermediate stage model and machining instructions based on the information of the product model 20.

In the intermediate stage model creating device 10, a history replay processing unit 12 applies a series of machining step information 242 in the machining information 24 of a product model to an arbitrary intermediate point by the above-described history replay function and creates an intermediate stage model indicative of a product state when the series of machining procedure is thus carried out to a midpoint. With regard to the shape, an intermediate stage model shape at an arbitrary stage can be created by sequentially subtracting the solid shape of each machining step information 242 from the solid shape of the blank material model 22. Further, similar to the case of a product model representing a completed product, it is possible to allow reference to the machining property of each portion of the intermediate stage model. For example, in the intermediate stage model, definition information of each unit process model is associated with a solid shape defined by the corresponding unit process model, so that when the user selects a region indicated by the unit process model on the display screen showing the intermediate stage model using a mouse or the like, it is possible to retrieve and display the machining property information of the unit process model.

According to the present embodiment, a model indicative of the machining result of one unit process 240 corresponding to each machine is referred to as an "in-process model". Further, in the present specification, a model indicative of an application result of each unit machining operation is referred to as an "operation model" in term of an application result of a machining "operation". In this case, an in-process model is a kind of operation model. Further, an operation model is equivalent to the intermediate stage model. (A product model which represents a final completed product is also treated as a type of "intermediate" stage model.) The in-process model for the last unit process 240 corresponds to the product model for the completed product.

Further, a drawing generation unit 14 generates a two-dimensional drawing which is equal to a conventional design drawing from the intermediate stage model created in the history replay processing unit 12.

The operation of the intermediate stage model creating device 10 will be described based on a specific example. Fig. 3 explains the configuration of a product model 20 which is used as a subject in this example. In this example, the product model 20 is composed of three types of machined portions A, B, and C. A machined portion is a set of one or more unit process models. For example, a machining operation for surface cutting is generally sectioned into stages and is performed in a plurality of stages, such as a "rough machining" stage in which a workpiece is roughly cut to approximately the desired machining depth, and a "finishing" stage in which the workpiece is cut to within the desire tolerance of the desired machining depth so as to create the desired surface roughness. Different tools, or even different machines, are used in these different stages. In this case, each of the "rough machining" and "finishing" corresponds to a unit process model (a machining step) indicating a unit machining operation. Here, a user can obtain conceptual understanding more easily when these unit process models are treated as one unit ("surface machining") which indicates a portion regarding one function. Therefore, according to the present embodiment, a sequence of unit process models to be applied for forming one portion by machining can be treated as a "machined portion". In the following description of an example procedure for creation of a product model, the concept of this machined portion is used.

Referring to Fig. 3, the machined portion A310 represents hole machining and is formed by a sequence of unit process models corresponding to three unit machining operations of "centering" A1, "chamfering + drilling an undersized hole" A2 and "finishing" A3 (to be more strict, a sequence of machining step information 242 including the disposition information 246 as well). The machined portion B represents hole tapping and is formed by a sequence of unit process models corresponding to three unit machining operations of "centering" B1, "drilling an undersized hole" B2, and "tapping" B3. Next, the machined portion C represents surface machining and is formed by a sequence of unit process models corresponding to two unit machining operations of "rough machining" C1 and "finishing" C2. The final product model 20 is formed by cutting a top surface of a blank material which is a rectangular parallelepiped block (not shown) to form a horizontal surface leaving a portion thereof (the machined portion C), and forming two holes (the machined portion A) and two tapped holes (the machined portion B) on the top surface.

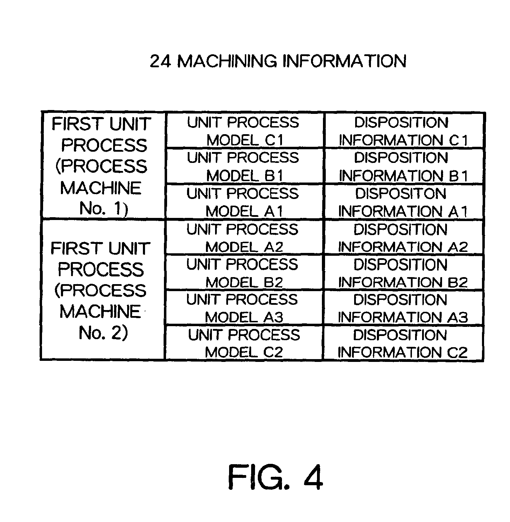

Assume that, in this product model 20, the "rough machining" C1 of the machined portion C and the "centering" A1 and B2 of the machined portions A and B can be carried out successively using a single machine (temporarily referred to as a machine No. 1) and the remaining unit machining operations A2, A3, B2, and C2 can be carried out successively using another single machine (referred to as a machine No. 2), the machining information 24 (see Fig. 1) for forming this product model 20 is as shown in Fig. 4, for example. The information in Fig. 4 shows the machining procedure (and the content of each machining step) in which in the first unit process, the surface rough machining C1 and the centering of each hole B1 and A1 are first carried out in that order using the machine No. 1 and then in the second unit process, the drilling an undersized hole for each hole A2, B2, finishing A3, and surface finishing C2 are carried out in that order. (The unit process model "tapping" B3 of the machined portion B is carried out by another machine used for tapping and is omitted in Fig. 4 to simplify the drawing.)

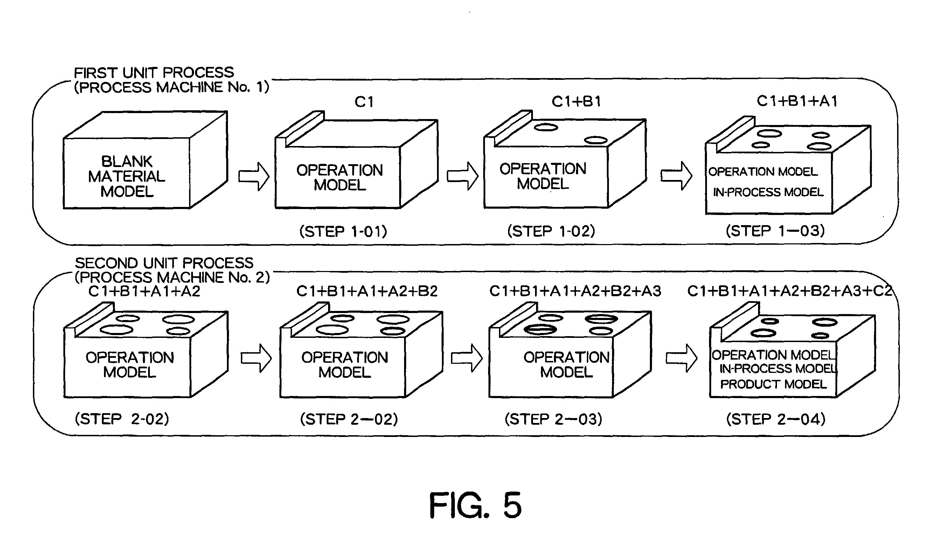

When the product model 20 including the machining information shown in Fig. 4 is provided, the history replay processing unit 12 of the intermediate stage model creating device 10 can create each intermediate stage model shown in Fig. 5.

More specifically, in the first unit process performed by the machine No. 1, a workpiece at the unit process starting point is represented by the blank material model 22. When the machining step information of the surface rough machining C1 in the first step (1-01 step) is applied to the blank material model 22, an operation model which indicates the state of the workpiece subjected to the machining C1 is obtained. Subsequently, the following machining step information in this first unit process is sequentially applied, and an in-process model indicative of the completed state of the workpiece in the first unit process is obtained (1-03 step) when the last machining step information (the centering A1) in the first unit process is applied.

In the second unit process performed by the machine No. 2, the workpiece at the unit process starting point is represented by the in-process model (not shown) of the previous unit process (namely, the first unit process). When each machining step information in the second unit process (see Fig. 4) is sequentially applied to the workpiece, each operation model indicative of the state of the workpiece at each step is obtained. Then, when application of all the machining step information in the second unit process is completed, an in-process model indicative of the completed state of the workpiece in the second unit process is obtained. In the example shown in Figs. 3 to 5, the in-process model in the second unit process is equivalent to the product model which represents the final product.

Thus, the history replay processing unit 12 can perform (replay) the sequence of machining step information 242 of the machining information 24 included in the product model 20 until a given point, to thereby create an intermediate stage model (operation model) indicative of the workpiece state to which the unit machining operations to that step have been applied.

Further, it is preferable that the history replay processing unit 12 includes user interface means for receiving user instructions indicating a specific machining step regarding which the user wishes to create an intermediate stage model. The user interface may be configured to display the sequence of the unit processes 240 and the sequence of machining step information 242 as shown in Fig. 4, such that the user can select a desired unit process or machining step among these displayed information. In such a case, when the user interface displays a name or explanation which indicates the content of each unit process 240 and each machining step information 24, user selection can be facilitated. These names and explanations can be previously registered at the time of process design or other appropriate point. It is also preferable that the user interface is configured to allow user's collective instruction such as an instruction to obtain in-process models for all the unit processes 240.

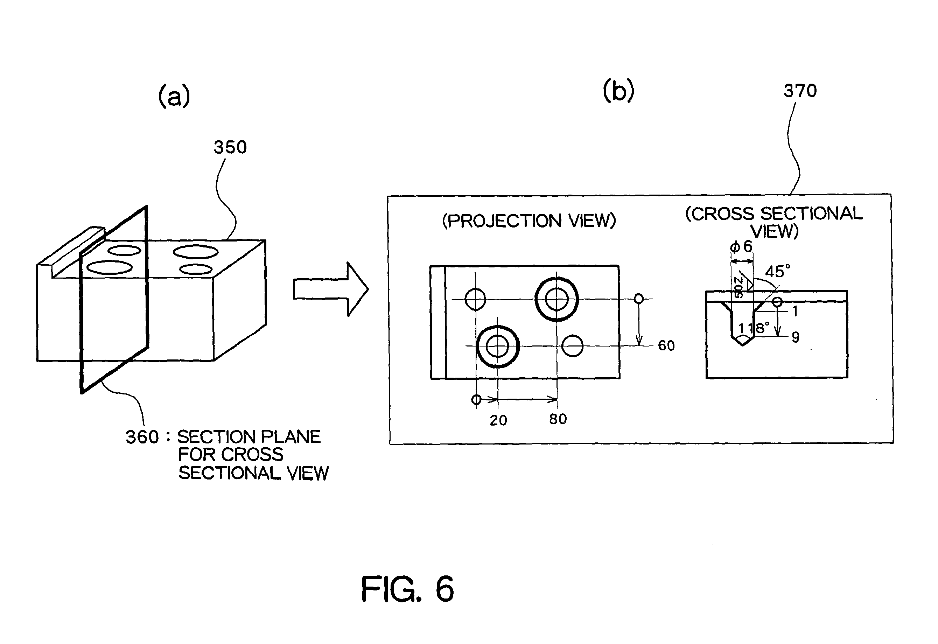

When a desired intermediate stage model is obtained by the above-described process, the drawing generation unit 14 generates a predetermined two-dimensional drawing from the model. Such a drawing may be a cross-sectional view or a projection view. The drawing generation unit 14 provides user interface means for accepting generation conditions of a cross sectional view or a projection view, including, for example, the position of a cross section for a cross sectional view and the projecting direction for a projection view. The user interface means displays a solid shape 350 of an intermediate stage model seen from a certain direction, as shown in Fig. 6(a), and receives designation of a cutting surface 360 for a cross sectional view on this display. Display of the solid shape 350 and designation of the cutting surface 360 can be performed using a display method and a surface designation method of the conventional CAD system. The projecting direction can be designated by, for example, allowing the user to designate the projecting direction on the display of the solid shape 350 using an arrow or the like. Fig. 6(b) shows an example of a machining instruction drawing 370 output by the drawing generation unit 14 in accordance with the designations as described above. Although the illustrated machining instruction drawing 370 includes one projection view and one cross sectional view, the machining instruction drawing 370 may include a plurality of projection view and/or a plurality of cross sectional view. (A user may in such a case designate a plurality of projecting directions and a plurality of cross sections.) Also, a machining instruction drawing including only one of a projection view and a cross sectional view may be generated. Because the intermediate stage model includes not only shape information but also machining property information of the respective portions forming that shape, the drawing generation unit 14 can also obtain these machining property information of the respective portions from the information of the intermediate stage model to generate a machining instruction drawing 370 including these machining property information. In the example shown in Fig. 6(b), the machining properties concerning the machined hole portion are shown in the cross sectional view. The drawing generation unit 14 can also extract information concerning dimension of each portion from the information of the intermediate stage model and display the information on the machining instruction drawing 370. It should noted that the operation model shown in Fig. 6 is an example which can be obtained when the step 2-01 in the second unit process shown in Fig. 5 is completed. Further, although it has been described that the projecting direction of a projection view is designated by the user, when the machining direction of each tool is limited to one direction in one unit process 240, it is possible to set the machining direction as a projecting direction and generate a projection view suitable for that unit process without user designation of the projecting direction.

As described above, according to the system of the present embodiment, by using the product model 20 which defines the completed state of a product by the sequence of machining step information 240, it is possible to create an intermediate stage model (operation model) indicative of the state of workpiece when the sequence has been carried out halfway until an arbitrary machining step, and further generate a machining instruction drawing from the intermediate stage model. When machining instruction drawings concerning the respective machining steps of one unit process 240 are generated and provided to an operator in charge of that unit process 240, the operator can refer to the drawings to carry out the machining. The machining instruction drawing can be provided to the machine operator in the form of a paper drawing or can, of course, be provided as electronic data stored in the intermediate stage model creating device 10.

Further, it is also possible to provide data concerning the intermediate stage model corresponding to a unit process 240 to an operator in charge of the unit process 240. In such case, the in-process model indicative of the result of the previous unit process and the sequence of the machining step information 242 for the subject unit process, for example, may be provided as data for defining the intermediate stage model. When the function of the history replay processing unit 12 is included in a terminal device of the machining operator, operation models at each machining step can be appropriately created and displayed on the terminal device as necessary. Further, when the function of the drawing generation unit 14 is included in the machine operator's terminal, it is possible to generate a desired projection view, a cross sectional view, or the like from the operation model, which can be then displayed on the screen or be printed and output.

As described above, in the present embodiment, it is possible to automatically generate a machining instruction drawing or an intermediate stage model indicating the state of a workpiece for each detailed section such as at each unit machining operation (each machining step), and provide such a drawing or intermediate stage model to a machine operator. The machine operator can then perform the machining operation using this information. In addition, the operator can also use the intermediate stage model for comparison with a workpiece at each machining step so as to determine which machining step has a problem, when the machining operation cannot be performed as instructed, for example.

Next, an embodiment of a larger scale system including a support device for creating (namely, designing) a product model 20 in addition to the mechanism for creating an intermediate model.

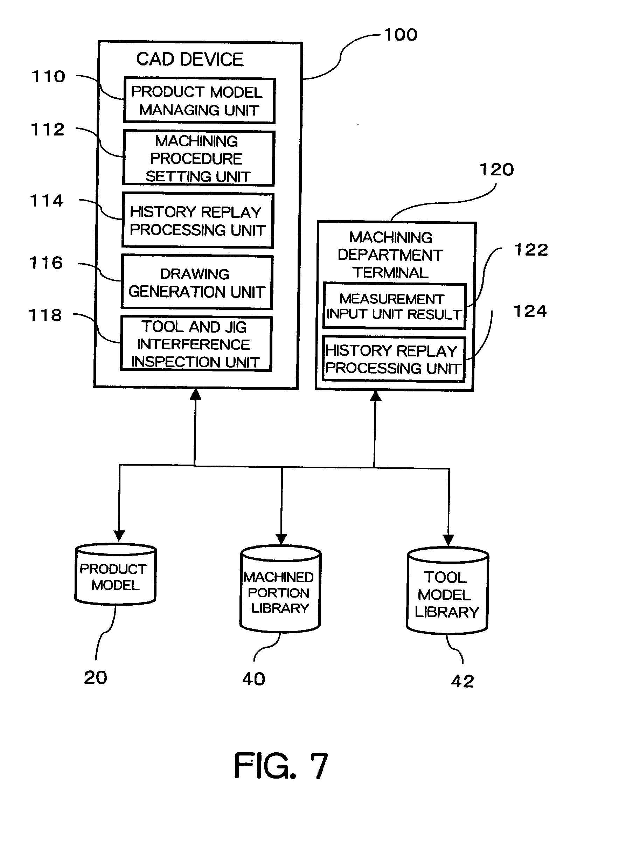

Fig. 7 is a functional block diagram showing a system configuration according to the second embodiment. In this system, a CAD device 100 is provided with a product model creation support (namely, "design support") function in addition to the above-described intermediate stage model creation function. In this example, a product model 20 is equivalent to the product model in the embodiment shown in Fig. 1. A machining department terminal 120 is a computer device installed in a department which performs machining (or owned by a machine operator) and has a function for creating an intermediate stage model based on the product model 20 which is created using the CAD device 100 and for inputting measurement data of the actually machined product.

A machined portion library 40 is a database in which a group of machined portion models are registered. Here, the machined portion model is a model of the "machined portion" described with regard to Fig. 3, and includes information concerning the shape and machining operation of a portion regarding one function in a product. The machined portion model includes, as its main item, information concerning the sequence of unit machining operations (unit process models) applied for forming the corresponding machined portion.

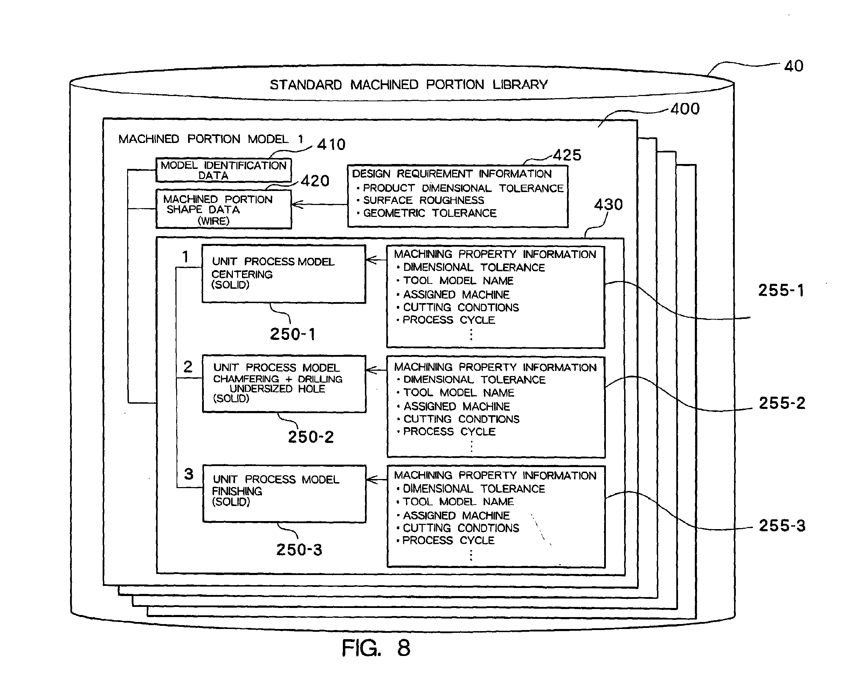

An example data content of this machined portion model is shown in Fig. 8.

Roughly speaking, the machined portion model 400 includes model identification information 410, machined portion shape data 420, and a unit process model assembly 430, as shown in Fig. 8. Fig. 8 shows content of a data model of the machined hole portion A310 shown in Fig. 3.

The model identification information 410 is used for identification and search of the machined portion model 400. For example, information indicating the type of workpiece to which the machined portion model is applied, information indicating the portion of the workpiece to which the machined portion is applied, and information concerning the name of the machined portion may be used for the model identification information 410. The workpiece type may be a name indicative of the workpiece, such as "straight four engine block" and "V-six engine block". With regard to the portion to which the machined portion model is applied, information such as the name indicating the portion in that workpiece, such as a top surface, a bottom surface, or a side surface, can be used. With regard to the name of the machined portion, the name which indicates the characteristics of the machine portion, such as "drilling and tapping" and "bank surface cutting" can be used. In addition, other key words which can be used for searching the machined portion may preferably included in the model identification information 410.

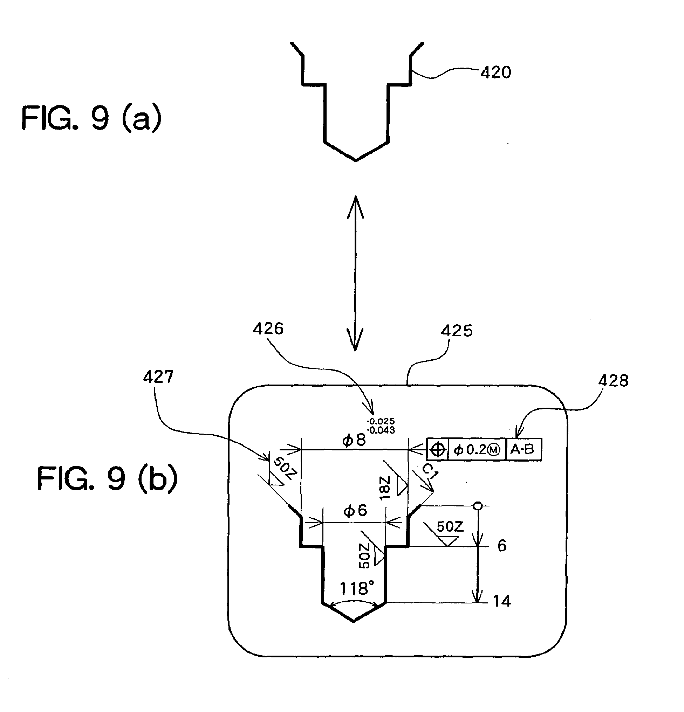

The machined portion shape data 420 is wire data which specifies a whole shape of a machined portion. For example, the machined portion shape data 420 of the machined hole portion A in Fig. 3 is a cross sectional profile which is a characteristics shape of that machined hole portion A, and is represented by a wire line as shown in Fig. 9(a). With this machined portion shape data 420, a designer who is familiar with two-dimensional design drawings would be able to recognize the shape of this machined portion model easily. While such a cross sectional profile can also be extracted from the data of a solid shape included in the unit process model assembly which will be described below, in this system, this cross sectional profile is previously registered as one information item of the machined portion model so as to allow high speed reference.

Further, design requirement information 425 is registered in the machined portion model 400 in association with the machined portion shape data 420. The design requirement information 425 is information concerning design requirement applied, in view of product design, to the machined portion represented by this machined portion model 400.

The design requirement information 425 includes dimensional tolerance 426, surface roughness 427, geometrical tolerance, and so on, for example, as shown in Fig. 9(b). The illustrated example shows that positional deviation 428 is provided as an example of the geometrical tolerance. The design requirement information 425 can further include numeral information concerning the dimension of each part of the corresponding machined portion. The design requirement information 425 may be included into the model 400 in the form of two-dimensional drawing information as shown in Fig. 9(b) and displayed appropriately on the CAD device 100 as necessary. Alternatively, each design requirement information item such as dimensional tolerance may be associated with each corresponding part of the wire data 420 as a property, so that the associated design requirement item can be displayed on the display of the wire data 420 when each part of the wire data 420 is clicked using a mouse or the like. In either case, it is possible to display the design requirement information 425 such that a designer can confirm the content of design requirement set for the machined portion model 400. It should be understood that in Fig. 9(b), the design requirement information 425 includes items such as the dimensional tolerance or the like only as one example, and can include other information of various design requirement items. Further, all of these design requirement items are not necessarily set for all the parts of the machined portion, and these items should be set only to parts which are necessary for design.

The unit process model assembly 430 is composed of one or more unit process models 250 forming the corresponding machined portion model. For the machine portion A shown in Fig. 3, the unit process model assembly 430 includes three unit process models 250-1 ∼ 250-3 shown in Fig. 2. The machining property information 255-1 to 255-3 are registered in association with the unit process models 250-1 to 250-3, respectively. These unit process models 250 and the machining property information 255 are already described with reference to Fig. 2. Further, the unit process model assembly 430 also stores information concerning the order of applying the unit process models 250 (the process order).

The machined portion model concerning the hole machining has been described. The data content of machined portion model for other types of machined portions may be basically the same.

In the case of the surface machined portion C shown in Fig. 3, for example, wire data which defines a plane corresponding to a completed surface (flat surface) of a product to be formed as the machining result can be used as the machined portion shape data 420, and the unit process model assembly 430 can be constituted by a sequence of the two unit process models, "rough machining" and "finishing". In such a case, the wire data corresponding to the machined portion shape data 420 represents a closed wire line 340 (see Fig. 3) included in an infinite plane which includes a product completed surface. This wire data is not merely a two-dimensional diagram, but also includes three-dimensional position information of the wire line on a reference coordinate system at the time of machining (such as coordinates of each vertex of a rectangular, for example). Accordingly, when a blank material model is disposed on a predetermined reference position on this reference coordinate system, the plane defined by this wire line corresponds to a surface indicative of a product completed surface obtained when the surface cutting regarding the corresponding machined portion model is applied to the blank material model. The completed surface of a product itself can be expressed in various types of data form. In this example, the product completed surface is expressed using wire data, partly because of consistency with data expression used for the machined portion shape data 420 regarding the machined hole portion and partly because the wire line can be used as a reference in automatic generation of tool paths. In the example shown in Fig. 3, the wire line has a rectangular shape. When the wire line corresponds to a contour of an actual product completed surface, it is possible to generate a tool path for machining along this line. Further, each unit process model such as "rough machining" and "finishing" can be expressed in a solid shape in which the wire line of the machined portion shape data forms a bottom shape and the thickness to be cut in the machining (the machining depth) corresponds to a height. Also, each unit process model of a surface machined portion can be expressed as an offset amount relative to the product completed surface indicated by the machined portion shape data (a height from the completed surface). When this is done, for the "finishing" model, for example, the offset from the product completed surface is 0.

The machined portion models have been described. The CAD device 100 of the present embodiment sequentially applies these machined portion models with regard to a blank material model to thereby create a product model. This is a product design operation in the system according to the present embodiment. A product model managing unit 110 of the CAD device 100 provides environment for such a product design operation to a user and performs a processing for forming a product model in accordance with an operation by the user.

The product model managing unit 110 displays a solid shape of the present product model on the display screen, and receives information representing user operation of a keyboard, a pointing device, and so on, with regard to the model. The product model managing unit 110 also provides a function for selecting a machined portion model. With this function, user designation of search conditions concerning the model identification information 410 (see Fig. 8) may be received and a machined portion model satisfying the designated conditions may be searched from the machined portion library 40. The search result is displayed in a form of a list of machined portion models satisfying the search conditions, for example. When "straight four engine block" is designated as the workpiece type and "top surface" is designated as the portion to be considered, for example, machined portion models which are registered in the library as machined portions of the "top surface" of a "straight four engine block" are extracted and displayed in list form. In this list, for each machined portion model, the identification information such as the workpiece type, applied portion, and machined portion name, as well as the wire model of a unit process model 250, are displayed. With regard to the machined hole portion, especially, display of the wire model facilitates specification of a desired machined portion model by a product designer, who often recognizes a machined portion in its cross sectional profile. Further, when the design requirement information 425 of a machined portion model, each unit process model 250 and machining property information 255 are also displayed, it is possible to provide information which facilitates user ability to decide whether or not the machined portion model is desirable. The detailed information such as design requirement information and unit process model assembly may also be displayed in accordance with the designer's instructions.

Once a desired machined portion model has been obtained in the above-described manner, the user then designates the application position (disposition position) of the machined portion model on the screen which displays a product model by means of a pointing device such as a mouse. The application direction (disposition direction) may also be designated as required. In this manner, it is possible to form a product model as though a machining operation is sequentially applied to a workpiece.

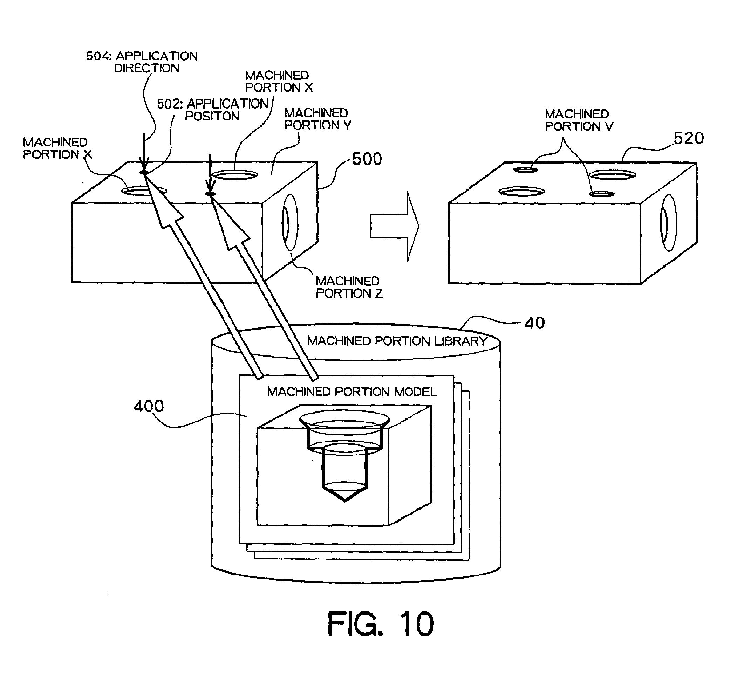

For example, Fig. 10 shows an operation for disposing a machined hole portion with regard to a product model. More specifically, this example shows an operation for applying a machined portion model 400 relating to a hole to a production model 500 in which a machined portion X (machined hole) and a machined portion Y (machined plane) are already applied to the top surface and a machined portion Z (machined hole) is already applied to the right side surface. In such a case, the user searches the desired machined portion model 400 from the machine portion library 40 using the above-described search tool, and instructs the application position 502 and the application direction 504 of the machined portion model 400 on the screen which displays the product model. In the example shown in Fig. 10, the identical machined portion models 400 are disposed at two different positions. Upon receiving such instructions, the product model managing unit 110 performs set operations regarding a solid shape of a product model 500 and a solid shape of the two disposed machine portion models 400 to obtain and display a shape of the production model which is now renewed by disposing the machined portion models 400 (the machined portions V).

By repeating this type of operation until all necessary machined portion models have been incorporated, a product model indicative of a final completed product can be created. The product model which is thus created can be expressed as, for example, a blank material model and a disposition operation history for applying the machined portion models to the blank material model, thereby expressing a shape and machining properties of each part of a product. However, the product model is not yet in a state of the product model shown in Fig. 1 because the order of applying each unit process model included in each machined portion model is not determined at this stage.

The order of applying each unit process model, namely the machining procedure, is determined by a designer in charge of the process design. The CAD device 100 includes a machining procedure setting unit 112 for setting this machining procedure. The basic function of the machining procedure setting unit 112 is to receive the application order input by the user concerning each unit process model included in the product model (more strictly, the machining step information combined with the information concerning the disposition on the model). It is also preferable that the machining procedure setting unit 112 is provided with a support function for facilitating this order input operation. Such a support function may include, for example, a function in which these unit process models are divided into groups according to the machine and the machining direction (the application direction 504 in Fig. 10) used, and the grouping information is provided to the user. A group made of unit process models to which the same machine and the same machining direction is applied can be treated as the unit process 240 (or what is very similar to the unit process), because, for such a group, continuous machining using a single machine can be performed without changing the holding state of a workpiece. The designer of process design determines each unit process 240 based on this grouping, determines the order of applying these unit processes 240, and further determines the order of application of each unit process model in each unit process 240, so that the product model 20 shown in Fig. 1, which includes the machining procedure information, can be created. It is further preferable that a group of unit process models with the same machine and the same machining direction is further divided into subgroups according to the tool to be used, and such grouping information is provided to the designer. Because it is more effective to process the unit process models to which the same tool is applied successively than in discontinuous order, the designer can refer to such subgrouping and easily determine the order of applying each unit process model in a unit process 240 with high operation efficiency. Further, the system checks a change in the order of machining process for a machined portion, which is not permitted (NG), regardless of whether such a change is made manually or automatically.

The process of creating a product model 20 including the information concerning the machining properties and machining procedure of each part performed by the CAD device 100 has been described. The CAD device 100 further includes a history replay processing unit 114 for creating an intermediate stage model based on the product model 20 and a drawing generation unit 116 for generating a machining instruction drawing or the like. The history replay processing unit 114 and the drawing generation unit 116 may be similar to the history replay processing unit 12 and the drawing generation unit 14 in the configuration shown in Fig. 1.

A tool and jig interference inspection unit 118 is a function tool for performing an interference inspection concerning a tool and a jig using the intermediate stage model created in the history replay processing unit 114.

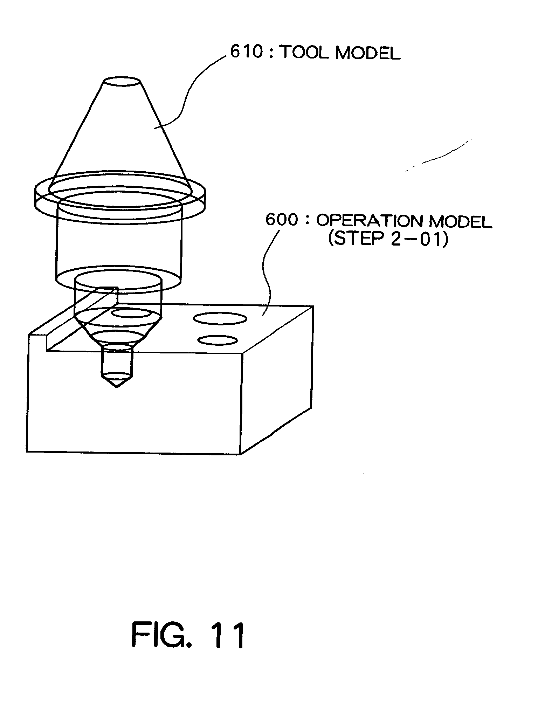

In the case of tool interference inspection, the inspection unit 118 can use an intermediate stage model obtained by applying the machining procedure up to a certain machining step and a CAD model (tool model) of a tool used for that machining step to inspect whether or not the workpiece and the tool interfere with each other. As illustrated in Fig. 11, in the tool interference inspection concerning the step 2-01 in the second unit process shown in Fig. 5, for example, the tool model 610 of the tool used in the step 2-01 (which can be specified by the "tool model name" of the machining properties of a unit process model in this step) is moved along the machining path, and it is inspected whether or not the tool model 610 interferes with the operation model 600 in the step 2-01. This inspection can be automatically performed by operations regarding the solid shape of the operation model 600 and the solid shape of the tool model 610. When the shape of the product model or the operation model is changed, this interference inspection is carried out once again. The data concerning the tool model 610 is registered in a tool model library 42, and an identification name of a tool model registered in this library 42 is used for the tool model name (see Fig. 2) of the machining property of each unit process model.

In the case of jig interference inspection, on the other hand, with regard to the in-process model 700 in the unit process 240 (see Fig. 1) (namely, a completed shape of the workpiece in that unit process), the inspection unit 118 assembles tool models 710 for all the tools used in this process and the jig model 720 representing the solid shape of the jig used in this process (namely, the inspection unit 118 disposes the tool models 710 and the jig model 720 at the corresponding application position for each tool and jig relative to the workpiece), to inspect the existence of interference between the tool models 710 and the jig model 720 and of interference between the jig model 720 and the product model or the operation model 700. When the shape of the product model or the operation model is changed, this interference inspection is repeated.

When such an inspection reveals possible interference of the tool or the jig, it is possible to change the design of a product or change the design of a tool or a jig, or the like.

The CAD device 100 has been described. According to the CAD device 100, by the operation of sequentially disposing machined portion models including the machining property information, a product model which includes not only shape information but also the machining property information can be created. This eliminates the need for determining the machining property information of each machined portion during the process design. Further, because shape information and machining information of a product are both integrated in the same product model 20 according to the present embodiment, time and labor for matching the results of the product design and the process design conventionally required can be eliminated.

Further, in the case of hole machining, for example, because the shape which can be machined by each tool (the shape as a result of machining) is determined by the shape of the tool, it is possible, conversely, to define the shape of a unit process model by referring to the tool model for each tool. When the shape of a unit process model is defined by referring to the tool model in this manner, the unit process model is sure to have a shape which can be machined, and a machined portion model which is defined as a sequence of these unit process models are also sure to have a shape which can be machined. Accordingly, a process model which is defined by disposing such machined portion models basically has a machinable shape as well, which significantly reduces the possibility of a conventional problem that a designed product shape cannot be actually machined. In addition, because interference inspection for the tool and the jig can be performed by the tool and jig interference inspection unit 118, machinability can be reviewed in further detail in the CAD device 100.

Further, when machined portion models with good workability are registered in the machine portion library 40 based on the past record or the like and are used to design a product, a resulting product model created using those models will also be preferable in terms of workability, so that designs superior in terms of machining considerations can be accomplished at the product design stage.

The system example of Fig. 7 shows a case in which the terminal device 120 in the machining department in charge of machining in a certain unit process is accessible to the product model 20, the machined portion library 40, and the tool model library 42. In this case, when the machining department terminal device 120 is provided with a history replay processing unit 124 which is equivalent to the history replay processing unit 114 of the CAD device 100, the machining department can freely access the product model 20 through its own terminal device 120 to create the intermediate stage model or the machining instruction drawing without the need to receive the intermediate stage model or the machining instruction drawing from the design section using the CAD device 100. At this point, it is only necessary for the design section to inform the machining department of information for specifying the machining steps at the beginning and end of the unit process 240 which the machining department is in charge of, and the machining department can create an arbitrary intermediate stage model or machining instruction drawing in the assigned unit process 240. When the product model 20 is changed as a result of a design change, the intermediate stage model or the machining instruction drawing which relies on the product model 20 are automatically changed in association with the change of the product model.

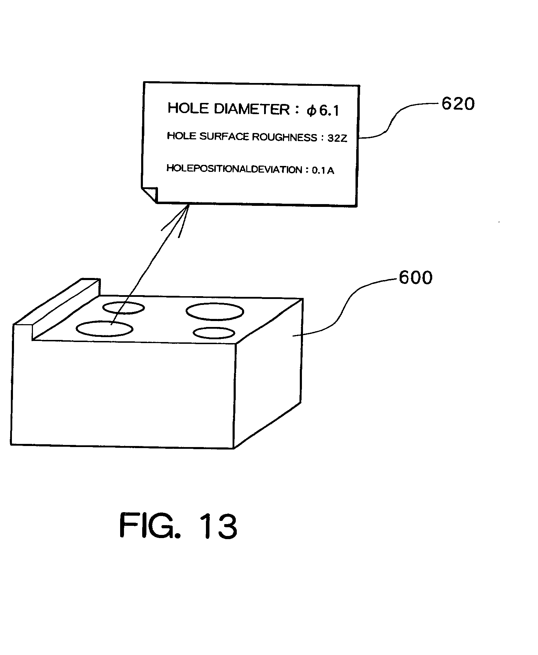

A measurement data input unit 122 of the machining department terminal device 120 is a means for inputting data resulting from measurement of a workpiece which was machined in the machining department. With this input unit 122, the measurement of a machined workpiece at each machining step can be registered in association with the operation model of the corresponding machining step. For example, as shown in Fig. 13, with regard to the operation model for the step 2-01 in the machining procedure shown in Fig. 5, the measurement data 620 can be registered as property information. In this case, the registered measurement data 620 can be associated with the operation model 600 by, for example, assigning the serial number concerning the machining step which defines the operation model 600 in the sequence of machining step information 242 shown in Fig. 1, to the workpiece measurement data 620 corresponding to the operation model 600. When the measurement data 620 is obtained for each machined portion or unit process model, information which specifies the machined portion or unit process model corresponding to the measurement data 620 may be registered. Further, in addition to the measurement data 620 in the form of numeric data, data obtained by deforming wire line data or surface data automatically generated from the measured points for facilitating recognition of a model image, and the machined result state and detailed machining conditions actually used in machining can preferably be registered as properties of the operation model.

Because information such as data from the measurement of a machined workpiece can be registered as properties of the corresponding operation model, it is possible to integrally manage the information concerning each operation model and the measurement of a corresponding workpiece using the information of a product model 20 as a core. Accordingly, it is also possible to refer to the design and actual machined state of each part of a workpiece subjected to each machining step simultaneously on the display screen indicating a three-dimensional solid shape of a product model 20.

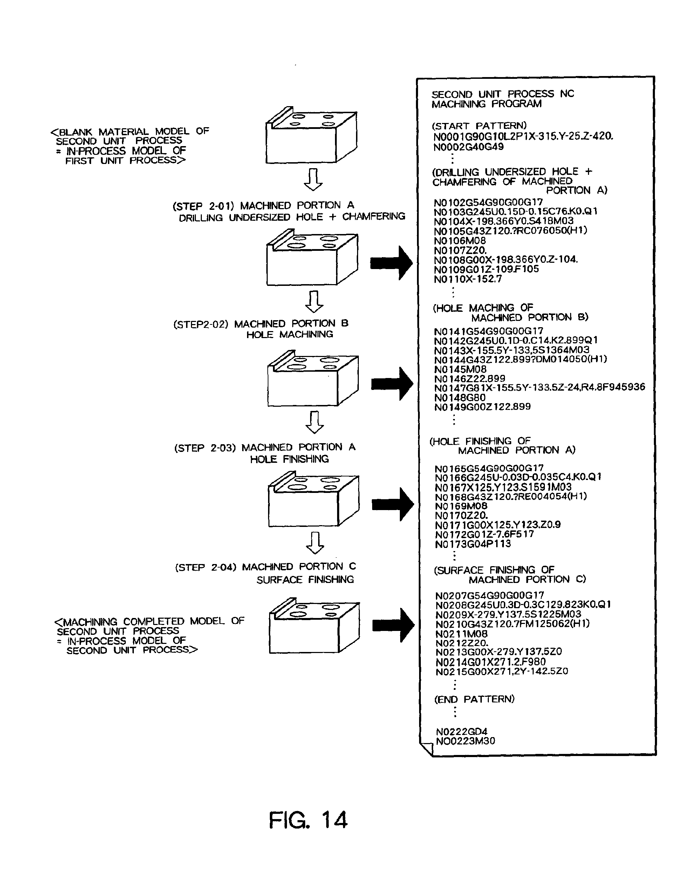

Further, according to the system of the present embodiment, it is also possible to automatically generate an NC (numerical control) machining program for controlling a process machine from a product model 20. Specifically, because the machining step information 242 included in the product model 20 includes machining property information such as a name of a tool (tool model name) used for machining, tolerance, and cutting conditions, and machining position and direction information (disposition information 246), an NC machining program module for a corresponding machining step can be automatically generated from this information. The NC control program based on machine (unit process 240) units can be generated by sequentially providing an NC machining program module for each machining step information 242 included in the unit process 240 for the corresponding machine. Fig. 14 illustrates a transition of a workpiece shape (operation model) in each machining step of the second unit process shown in Fig. 5 and an example NC control program generated corresponding to this transition. When a product model 20 is changed as a result of a design change, an NC machining program corresponding to this design change can be obtained by regenerating such an NC machining program from the changed product model 20. Because of the NC machining program is automatically generated based on a product model 20, an intermediate CAM model is not necessary.

Further, the system according to the present embodiment can also be used so as to support generation of a three-dimensional measurement program for measuring a workpiece. Specifically, when the system is configured to create an operation model indicative of a workpiece to be measured and allows the user to designate a measuring portion on the display screen of this operation model, it is possible to generate a measurement program based on this designation. In addition, the measuring portion, measuring procedure, measuring method, measuring point or the like can also be generated automatically from the machining precision information (such as dimensional tolerance and geometric tolerance) obtained from the operation model.
While the above preferred embodiments of the present invention have been described using specific terms, such description is for illustrative purposes only, and it is to be understood that changes and variations may be made without departing from the spirit or scope of the appended claims.

## Claims

1. An intermediate model creating apparatus comprising:
a model database for storing a product model which defines a shape of a product using a blank material model representing a shape of a blank material to be machined, one or more unit process model including information concerning a machined portion to be formed by a machining operation, and information concerning an execution order for carrying out a machining operation corresponding to each unit process model with regard to the blank material; and
a modeler for sequentially applying each unit process model to the blank material model up to a midpoint in the execution order and creating an intermediate stage model indicating a product shape in a state where the machining operation corresponding to each unit process model has been applied up to the midpoint in the execution order.

2. An intermediate stage model creating apparatus according to claim 1, wherein
the unit process model includes information concerning a shape of a machined portion which is machined by a single tool.

3. An intermediate stage model creating apparatus according to claim 1 or 2, wherein
the information concerning the execution order includes information concerning the order of unit processes determined according to machines used for the machining operation and information concerning the order of unit process models constituting a unit process within the unit process, and
the modeler includes means for sequentially applying each unit process model up to a designated unit process to the blank material model and creating, as one type of an intermediate stage model, an in-process model representing a product shape as a result of the machining operation of the designated unit process.

4. An intermediate stage model creating apparatus according to any one of claims 1 to 3, wherein
each unit process model includes machining property information concerning a machined part represented by the model, and the intermediate stage model is associated with the machining property information of the unit process model included in the intermediate stage model.

5. An intermediate stage model creating apparatus according to any one of claims 1 to 4, wherein
the blank material model and the unit process model include shape information in the form of a three-dimensional solid model, and a shape of the product model and the intermediate stage model represented by a combination of the blank material model and the unit process model is also expressed in the form of a three-dimensional solid model.

6. An intermediate stage model creating apparatus according to claim 5, further comprising means for generating a cross sectional view of a designated cross section regarding the intermediate stage model created by the modeler.

7. An intermediate stage model creating apparatus according to claim 5, further comprising means for generating a projection view of a predetermined projection surface regarding the intermediate stage model created by the modeler.

8. An intermediate stage model creating apparatus according to any one of claims 1 to 7, further comprising means for storing measurement data of a workpiece corresponding to the intermediate stage model as property information concerning the intermediate stage model.

9. An intermediate stage model creating apparatus according to any one of claims 1 to 8, further comprising means for performing, based on the intermediate stage model and information regarding a tool used for machining a unit process model applied to the intermediate stage model in the execution order, interference inspection concerning the tool.

10. An intermediate stage model creating apparatus according to claim 3, further comprising means which creates a model indicating a state in which a tool model for each tool used in the unit process corresponding to the in-process model is disposed with regard to a portion of the in-process model to which the tool is applied and performs, based on this model and a jig model representing a jig used in the unit process, interference inspection concerning the jig.

11. An intermediate stage model creating apparatus according to claim 3, further comprising means for generating an NC (numerical control) machining program for controlling an NC machine which performs a machining operation in the unit process based on information concerning the unit process model included in the product model and the execution order.

12. An intermediate stage model creating apparatus according to any one of claims 1 to 11, further comprising:
a library in which plural types of the unit process models are registered; and
product model creating means for creating a product model based on one or more unit process model registered in the library and the blank material model;
wherein the product model creating means includes:
unit process model selection means for accepting user's input of a selection instruction concerning the unit process model in the library and of disposition information indicating layout of the unit process model associated with the selection instruction, and
sequence input means for accepting user's input of an instruction concerning the order of applying the unit process model selected by the unit process model selection means and registering the order as the execution order.

13. A method of creating an intermediate stage model, comprising the steps of:
creating a product model which stores a blank material model representing a shape of a blank material to be machined, a unit process model including information concerning a machined portion to be formed by a machining operation, and information concerning an execution order for carrying out a machining operation corresponding to each unit process model with regard to the blank material; and
sequentially applying each unit process model to the blank material model up to a midpoint in the execution order to create an intermediate stage model indicating a product shape in a state where the machining operation corresponding to each unit process model has been applied up to the midpoint in the execution order.

14. A method according to claim 13, wherein
each unit process model includes machining property information concerning a machined site represented by the model, and the intermediate stage model is associated with the machining property information of the unit process model included in the intermediate stage model.

15. A method according to claim 14, further comprising the step of:
displaying the machining property information of the unit process model included in the intermediate stage model.

16. An intermediate stage model creating method according to claim 13, wherein
the blank material model and the unit process model include shape information in the form of a three-dimensional solid model, and a shape of the product model and the intermediate stage model represented by a combination of the blank material model and the unit process model is also expressed in the form of a three-dimensional solid model.
